Europäisches Patentamt

European Patent Office

Office européen des brevets

(19)

(11) Veröffentlichungsnummer : **0 079 324**
**B1**

(12) # EUROPÄISCHE PATENTSCHRIFT

(45) Veröffentlichungstag der Patentschrift :
06.07.88

(51) Int. Cl.⁴ : **H 04 B   5/00**

(21) Anmeldenummer : 82890164.5

(22) Anmeldetag : 05.11.82

(54) **Breitband-Tunnelfunkanlage.**

(30) Priorität : 06.11.81 AT 4784/81

(43) Veröffentlichungstag der Anmeldung :
18.05.83 Patentblatt 83/20

(45) Bekanntmachung des Hinweises auf die Patenterteilung : 06.07.88 Patentblatt, 88/27

(84) Benannte Vertragsstaaten :
CH FR LI NL

(56) Entgegenhaltungen :
DE-A- 2 402 600
DE-A- 2 500 941
GB-A- 1 478 895
US-A- 3 281 591

(73) Patentinhaber : SIEMENS AKTIENGESELLSCHAFT
ÖSTERREICH
Siemensstrasse 88 - 92
A-1210 Wien (AT)

(72) Erfinder : Stockinger, Heimut
Russbergstrasse 20/3/3
A-1210 Wien (AT)
Erfinder : Marek, Werner
Bahnstrasse 10a
A-1140 Wien (AT)

EP 0 079 324 B1

**Beschreibung**

Gegenstand der Erfindung ist eine Breitband-Tunnelfunkanlage mit einer parallel zur Tunnelachse und über die ganze Tunnellänge angeordneten Antennenleitung, die als Sende- und/oder Empfangsantennen dienende Abschnitte eines Kabels oder einer Zweidrahtleitung aufweist, welche über Verstärkeranordnungen und einen parallel zur Antennenleitung angeordneten Signalleitungskreis mit eingefügten Verstärkern, mit einem Signalgeber und einem Signalempfänger gekoppelt sind.

Tunnelfunkanlagen werden in zunehmendem Maße in lange Straßentunnel, vorzugsweise in Autobahntunnel eingebaut, da sie in mehrfacher Hinsicht die Sicherheit der Verkehrsteilnehmer erhöhen. Sie gewährleisten den Empfang von Rundfunksendungen, erlauben Durchsagen an die im Tunnel befindlichen Kraftfahrer und ermöglichen bei Verkehrsstörungen den Sprechkontakt von Einsatzfahrzeugen untereinander oder mit der außenliegenden Tunnelwarte.

Die Tunnelfunkanlagen weisen eine den Tunnel in seiner ganzen Längserstreckung durchziehende Antennenleitung auf, bevorzugt in Form eines sogenannten « strahlenden Kabels » oder eines symmetrischen Zweidrahtsystems, die mittels Stützen und Abspanneinrichtungen an einer Wand oder neuerdings auch am First des Tunnels befestigt ist. Die in der Gegend des Tunnels zu empfangenden UKW-Programme werden durch in der Tunnelwarte angeordnete Geräte empfangen, verstärkt und auf die Antennenleitung übertragen, sodaß sie innerhalb der ganzen Tunnelstrecke ohne Änderung der Empfängereinstellung empfangen werden können. Es besteht auch die Möglichkeit, von der Tunnelwarte aus durch Modulation Durchsagen auf das UKW-Programm aufzuschalten oder solche mittels eigener Frequenzen an innerhalb des Tunnels befindliche Einsatzfahrzeuge zu richten oder einen Sprechfunkkontakt zwischen im Tunnel befindlichen Einsatzfahrzeugen zu bieten.

Bei der neuerdings bevorzugten Zweidrahtleitung werden durch Verwendung von Stahldraht mit einem Kupfermantel, der hohe Leitfähigkeit mit hoher Zugfestigkeit vereint, sowie durch die Ausgestaltung der Stützen und Abspanner günstige Eigenschaften bezüglich mechanischer Stabilität, optimaler Sicherheit bei Brand im Tunnel und bester Werte von Dämpfung und Koppeldämpfung erzielt. Trotzdem ist es wegen der meist großen erforderlichen Antennenlängen notwendig, im Zuge der Antennenleitung Breitbandregelverstärker mit Entzerrernetzwerken anzuordnen, um die frequenzabhängige Leitungsdämpfung auszugleichen. Durch die Ablagerung von Staub, Salz, Ruß usw. auf der Oberfläche der feuchten oder nassen Antennenleitung können erhebliche Dämpfungserhöhungen auftreten.

Aus der DE-A 2 500 941 ist eine parallel zur Antennenleitung angeordnete Signalleitung mit Signal-Verstärkern bekannt, die lediglich zur Weiterleitung von Sendesignalen dient. Eine Möglichkeit zum Empfang von Signalen von Fahrzeugen wird in Form einer unfertigen Lösung nur angedeutet, nämlich « Antwortsignale mit Audiofrequenz in jeder Station mit Telefonleitungen aufzunehmen ».

Die Schaltung nach der US-A 1 478 895 zeigt in Fig. 1 einen parallel zur Antennenleitung (10) angeordneten Tonfrequenz-Kreis (audio circuit) (14), der jedoch zwei voneinander unabhängige Tonfrequenz-Verbindungsleitungen (audio link) aufweist, an deren eine alle Sender (12) und an deren andere alle Empfänger (13) geschaltet sind.

Diese Mängel werden erfindungsgemäß dadurch vermieden, daß der Signalleitungskreis eine für Sende- und Empfangssignale sowohl gemeinsame als auch mit gleicher Signalflußrichtung betriebene Signalleitung aufweist, und daß die Signalleitung abschnittsweise mittels jeweils mindestens eines, zwischen zwei Verstärkern angeordneten Richtkopplers sowie Sende- und Empfangsverstärkern an benachbarte Abschnitte der Antennenleitung angekoppelt ist.

Der mit der erfindungsgemäßen Anordnung erzielbare Vorteil liegt darin, daß über die vor Umwelteinflüssen geschützte und daher gleichbleibende elektrische Werte aufweisende, leicht beherrschbare einzige Speiseleitung der Transport der Empfangs- und Sendesignale zu den einzelnen Antennenabschnitten erfolgen kann. Ein weiterer Vorteil liegt darin, daß die erfindungsgemäße Einfügung der Richtkoppler in den Signalleitungskreis die Voraussetzung dafür schafft, durch Ausnützung der Richtkoppler für Entkopplungsmaßnahmen eine vorteilhafte, einfache, für Sende- und Empfangssignale gemeinsam verwendbare und mit gleicher Signalflußrichtung betreibbare Signalleitung in filter- und weichenfreier breitbandiger Ausführung vorsehen zu können.

Die nachfolgende Beschreibung möglicher erfindungsgemäßer Schaltungsanordnungen soll durch Zeichnungen verdeutlicht werden.

Die Fig. 1-3 zeigen Prinzipschaltbilder von Anlagen, bei denen Senden und Empfangen über die gleiche strahlende Antennenleitung erfolgen.

Fig. 4 zeigt eine Anlage bei der Senden und Empfangen über getrennte strahlende Antennenleitungen erfolgen. Die Bezugszeichen sind für gleiche Teile in allen Figuren gleich gewählt.

Mit 1 ist die Signalleitung bezeichnet, die in vor Umwelteinflüssen geschützter Lage im Tunnel verlegt ist und eine außerhalb eines Tunnelendes, vorzugsweise in der Tunnelwarte angeordnete Sendeanlage mit einer außerhalb des anderen Tunnelendes liegenden Empfangsanlage verbindet. Diese Anlagen sind hier nicht gezeigt. Im Zuge der Signalleitung 1 sind Verstärker 2a, 2b angeordnet. Über Richtkoppler 3a, 3b, wird das HF-Signal aus der Signalleitung 1 ausgekoppelt und Sendeverstärkern 4a, 4b zugeführt. Das Ausgangssignal je eines Sendeverstärkers 4a bzw. 4b zugeführt. Das Ausgangssignal je eines Sendeverstärkers 4a bzw. 4b wird einem Abschnitt einer strahlenden Leitung 5a, 5b, zugeführt. An jeder Ausgangleitung der Sendeverstärker 4a, 4b, ist je ein Richtkoppler 6a, 6b angeschlossen, von dem über einen gemeinsamen Übertrager 7 ein Empfangsverstärker 8 angesteuert wird, der seinerseits über einen weiteren Richtkoppler 9 in die Speiseleitung 1 einspeist. Durch die gegenphasige Ansteuerung des Empfangsverstärkers mit den Sendesignalen sowie durch die Richtwirkung zwischen den Richtkopplern 9 und 3a bzw. 3b wird eine gute Entkopplung zwischen Sende- und Empfangskreis in jedem Abschnitt erzielt und damit eine unwillkommene Verstärkung auf dem durch die Schaltelemente 3, 4, 6, 7, 8 u. 9 gegebenen Umweg sowohl nach 2b als auch rückwirkend nach 3a bzw. 3b weitgehend unterdrückt.

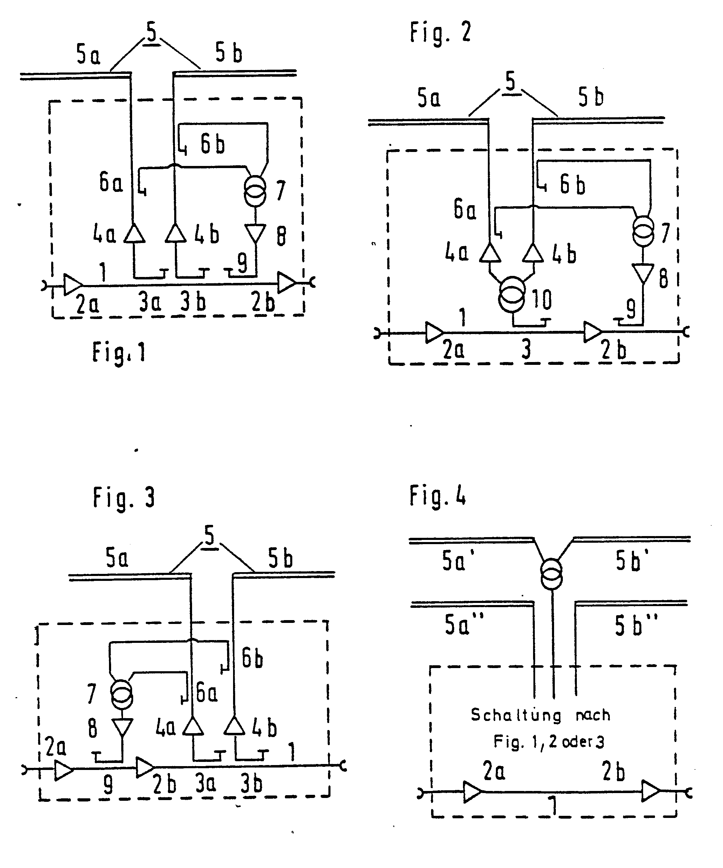

Fig. 2 zeigt eine Schaltungsanordnung, bei der die Sendeverstärker 4a, 4b, aus einem gemeinsamen Richtkoppler 3 über einen gemeinsamen Übertrager 10 angesteuert werden. Die Anordnung des Verstärkers 2b zwischen den Richtkopplern 3 und 9 dient ebenfalls der genannten Entkopplung der beiden Kreise.

Fig. 3 zeigt eine Schaltung, die der Schaltung nach Fig. 1 mit der einen Ausnahme entspricht, daß der Verstärker 2b im Zuge der Speiseleitung 1 zwischen dem Richtkoppler 9 für den Empfangsverstärker und den Richtkopplern 3a, 3b für die Sendeverstärker 4a, 4b angeordnet ist. Diese Maßnahme dient ebenso wie die zuvor beschriebenen Maßnahmen der genannten Entkopplung.

Fig. 4 zeigt eine ebenfalls im Rahmen der Erfindung liegende Anordnung, bei der als zusätzliche Entkopplungsmaßnahme für Senden und Empfangen verschiedene strahlende Leitungen 5a', 5b' bzw. 5a", 5b" verwendet werden. Die Schaltungsanordnung der Verstärker, Richtkoppler und Übertrager kann dabei nach einem der in den Fig. 1-3 gezeigten Schemata erfolgen.

## Patentanspruch

Breitband-Tunnelfunkanlage mit einer parallel zur Tunnelachse und über die ganze Tunnellänge angeordneten Antennenleitung (5), die als Sende- und/oder Empfangsantennen dienende Abschnitte eines Kabels oder einer Zweidrahtleitung aufweist, welche über Verstärkeranordnungen und einen parallel zur Antennenleitung (5) angeordneten Signalleitungskreis (1, 2) mit eingefügten Verstärkern (2), mit einem Signalgeber und einem Signalempfänger gekoppelt sind, dadurch gekennzeichnet, daß der Signalleitungskreis (1, 2) eine für Sende- und Empfangssignale sowohl gemeinsame als auch mit gleicher Signalflußrichtung betriebene Signalleitung (1) aufweist, und daß die Signalleitung (1) abschnittsweise mittels jeweils mindestens eines, zwischen zwei Verstärkern (2) angeordneten Richtkopplers (3, 9) sowie Sende- und Empfangsverstärkern (4, 8) an benachbarte Abschnitte der Antennenleitung (5) angekoppelt ist.

## Claim

A wide-band tunnel radio system with an antenna line (5) which extends parallel to the tunnel axis along the entire tunnel length, and which comprises sections of a cable or a two-wire line to serve as transmitting and/or receiving antennae coupled to a signal transmitter and a signal receiver via amplifiers and a signal line circuit (1, 2), arranged in parallel to the antenna line (5) with interposed amplifiers (2), characterised in that the signal line circuit (1, 2) comprises a signal line (1) common to the transmitted and received signals and operated with the same signal flow direction, and that the signal line (1) is coupled section-by-section to adjacent sections of the antenna line (5) by means of at least one respective directional coupler (3, 9) arranged between each two amplifiers (2), and by means of transmitting and receiving amplifiers (4, 8).

## Revendication

Installation radio à large bande pour tunnels, comportant un conducteur d'antenne (5) qui est parallèle à l'axe du tunnel, s'étend sur toute la longueur de ce dernier et comporte des sections d'un câble ou d'une ligne bifilaire, qui servent d'antennes d'émission et/ou de réception et sont couplées à un générateur de signaux et à un récepteur de signaux, par l'intermédiaire de dispositifs amplificateurs et d'un circuit formant ligne de transmission de signaux (1, 2), qui est parallèle au conducteur d'antenne (5) et dans lequel sont insérés des amplificateurs (2), caractérisé par le fait que le circuit (1, 2) formant ligne de transmission de signaux comporte, pour des signaux d'émission et des signaux de réception, une ligne (1) de transmission de signaux à la fois commune et fonctionnant avec la même direction de transmission des signaux, et que la ligne (1) de transmission de signaux est couplée, par sections, à des sections voisines du conducteur d'antenne (5), par l'intermédiaire d'au moins un coupleur directionnel (3, 9) disposé entre deux amplificateurs (2), ainsi que d'amplificateurs d'émission et de réception (4, 8).

Fig. 2

Fig. 1

Fig. 3

Fig. 4

Schaltüng nach
Fig. 1, 2 oder 3